# EUROPÄISCHE PATENTSCHRIFT

(11) **EP 2 110 222 B1**
(45) Veröffentlichungstag und Bekanntmachung des Hinweises auf die Patenterteilung: **15.06.2011**
(21) Anmeldenummer: 09005156.6
(22) Anmeldetag: 08.04.2009
(51) Int. Cl.: B29C 45/26, F16C 33/38, F16C 33/44, F16C 33/46, F16C 33/56

(54) **Wälzlagerkäfig und Verfahren zum Herstellen eines Wälzlagerkäfigs**
Roller bearing cage and method for manufacturing a roller bearing cage
Cage de palier de roulement et procédé destiné à la fabrication d'une cage de palier de roulement

(30) Priorität: 17.04.2008 DE 102008019223
(43) Veröffentlichungstag der Anmeldung: 21.10.2009
(73) Patentinhaber: AB SKF, 415 50 Göteborg (SE)
(72) Erfinder: Stork, Josef, 97447 Gerolzhofen (DE); Eich, Bernd, 97727 Fuchsstadt (DE)
(74) Vertreter: Schonecke, Mitja

(56) Entgegenhaltungen:
- EP-A- 0 304 872
- EP-A- 0 992 696
- WO-A-2005/116469
- DE-A1- 1 804 164
- DE-B4- 10 164 937
- FR-A- 1 186 049
- US-A- 3 141 711
- US-A- 3 477 773
- US-A- 3 626 565

## Beschreibung

Die Erfindung betrifft einen Wälzlagerkäfig und ein Verfahren zum Herstellen eines Wälzlagerkäfigs.

Die Aufgaben von Wälzlagerkäfigen sind vielfältig. So können sie dazu beitragen, die Wälzkörper zwischen den Laufbahnen zu halten, sie verhindern ein Berühren der Wälzkörper untereinander, sie können die Wälzkörper im Käfig festhaltend ausgebildet sein, die Wälzkörper führen, die Lagergrenzdrehzahl sowie die Lagerschmierung beeinflussen und auch Schwingungen und damit Geräusche dämpfen. Ein spritz- und/oder gusstechnisch erzeugter Käfig ist aus FR 1 186 049 A bekannt. Hier werden das Einschnappen und die Verliersicherung der wälzkörper durch Einschnitte in den Stegelementen des käfigs erzielt. Dabei sind bei spritz- und/oder gusstechnischer Herstellung von Käfigen Werkzeuge mit einer Vielzahl unterschiedlichster Schieber bekannt.

DE 1 804 164 A beschreibt ein Verfahren zur Herstellung eines einteiligen käfigs aus Kunststoff für einen Massenartikel.

Eine Aufgabe der vorliegenden Erfindung ist es, einen Wälzlagerkäfig und ein Verfahren zum Herstellen eines Wälzlagerkäfigs zu schaffen, so dass der Käfig unter anderem auch für Klein- und Kleinstserien einfach und damit kostengünstig herstellbar ist.

Die Aufgabe wird hinsichtlich des Wälzlagerkäfigs durch den Gegenstand des Anspruchs 1 und hinsichtlich des Verfahrens durch den Gegenstand des Anspruchs 8 gelöst. Vorteilhafte Ausgestaltungen sind in den Unteransprüchen beschrieben.

Gemäß Anspruch 1 beinhaltet ein Wälzlagerkäfig folgende Merkmale:
- Der Käfig ist einstückig spritz- und/oder gusstechnisch erzeugt,
- der Käfig umfasst zwischen den Wälzkörpern angeordnete Stegelemente, die sich radial beidseits eines Teilkreises der Wälzkörper erstreckend ausgebildet sind,
- die den Wälzkörperoberflächen zum Gegenüberliegen vorgesehenen Flächen des Käfigs sind entsprechend der Wälzkörperoberfläche geformt, und
- ein Öffnungsmaß zwischen zwei benachbarten Stegelementen ist nach radial innen oder außen zwischen 99 und 97 % des Wälzkörperdurchmessers und zur radial anderen Richtung kleiner als in die radial erste Richtung.

Insbesondere bei Wälzlagerkäfigen, bei denen das Öffnungsmaß nach radial innen hin in etwa zwischen 99 und 97 % des Wälzkörperdurchmessers beträgt und der Wälzlagerkäfig einen vergleichsweise kleinen Durchmesser bzw. ein vergleichsweise kleines Verhältnis von Käfigdurchmesser zu radialer Stegdicke aufweist, ist ein derartiger Wälzlagerkäfig mit konventionellen Spritzgussformen, die sich dann nach radial innen hin bewegbarer Schieber bedienen müssten, nicht herstellbar, da nach radial innen hin nur ein begrenzter Raum für Schieberwerkzeuge und deren Antriebe zur Verfügung steht.

Gemäß Anspruch 8 werden bei einem Verfahren zum Herstellen eines Wälzlagerkäfigs mit einer Spritz- und/oder Gussform, die derart ausgebildet ist, dass die Zwischenräume für die als Rollen ausgebildeten Wälzkörper zwischen den Stegelementen des Käfigs durch entsprechend den Rollen ausgebildete Kerne freigehalten werden, und die wenigstens zwei weitere Formteile umfasst, die Kerne und die Formteile zusammengesetzt und es wird ein spritz- und/oder gussfähiges Material in flüssigem Zustand in die zwischen den Kernen und den Formteilen verbleibenden Freiräume eingespritzt und/oder eingegossen.

Dabei zeichnet sich das vorausgehend beschriebene Verfahren mit besonderem Vorteil dadurch aus, dass die verwendeten Kerne und Formteile eine einfachste Form aufweisen und somit kostengünstig herstellbar sind. Ferner kommt das vorausgehend beschriebene Verfahren mit besonderem Vorteil ohne radiale Schieberwerkzeuge zum Ausbilden der Käfige aus. Dabei sind bei dem vorausgehend beschriebenen Verfahren aufgrund der einfachen und damit kostengünstigen Formwerkzeuge bei geringem bzw. gar nicht vorhandenem Automatisierungsgrad bei der Entformung mit besonderem Vorteil Klein- und Kleinstserien von Käfigen von einem bis zu wenigen tausend Stück wirtschaftlich herstellbar.

Weitere Vorteile, Merkmale und Einzelheiten der Erfindung ergeben sich aus den im Folgenden beschriebenen Ausführungsbeispielen der Erfindung anhand der Figuren. Dabei zeigen:
- Figur 1: einen ausschnittsweisen Querschnitt durch einen Wälzlagerkäfig und
- Figur 2: in perspektivischer Ansicht eine Spritzgussform aus zwei Formteilen und mehreren Kernen zum Herstellen eines Kugellagerkäfigs.

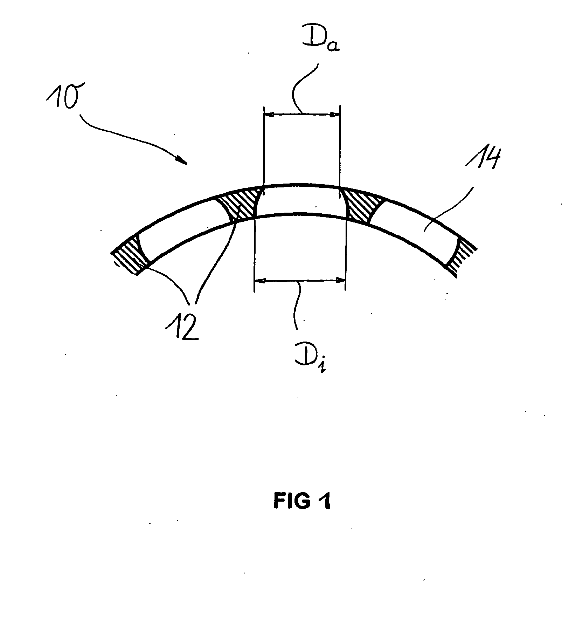

Die Figur 1 zeigt als ein Ausführungsbeispiel der Erfindung einen ausschnittsweisen Querschnitt durch einen Wälzlagerkäfig 10 im Bereich seiner Stegelemente 12. Dabei umfasst der für Zylinderrollen ausgebildete Wälzlagerkäfig 10 an seinen beiden axialen Enden zwei gleichartig ausgebildete ringartige Seitenelemente 14, zwischen denen die im Schnitt dargestellten Stegelemente 12 ausgebildet sind. Dabei weist der Wälzlagerkäfig 10 entsprechend der Anzahl an Stegelementen 12 Käfigtaschen auf, wobei jede Tasche zum Aufnehmen einer Zylinderrolle vorgesehen ist. Dabei ist jede der Käfigtaschen durch zwei benachbarte Stegelemente 12 und diese beiden Stegelemente 12 auf kurzem Weg miteinander verbindenden sektorartige Abschnitte der beiden Seitenelemente 14 begrenzt. Eine Einhüllende des Wälzlagerkäfigs 10 entspricht dabei in der einfachsten Ausführungsform in etwa einem Hohlkreiszylinder.

Die den Zylinderrollenmänteln zum Gegenüberliegen vorgesehenen Seitenflächen der Stegelemente 12 sind dabei entsprechend eines Längsstreifens eines Kreiszylindermantels geformt. Dabei ist der Wälzlagerkäfig 10 derart ausgebildet, dass ein Öffnungsmaß Dᵢ zwischen zwei benachbarten Stegelementen 12 nach radial innen hin zwischen 99 % und 97 % eines mittleren Durchmessers der Zylinderrollen beträgt. Dies hat den besonderen Vorteil, dass die Zylinderrollen von radial innen her noch in den Käfig 10 eingeschnappt werden können und somit verliersicher im Käfig 10 gehalten werden. Bei kleineren Öffnungsmaßen wäre eine Einschnappmöglichkeit der Zylinderrollen nicht mehr sichergestellt. Wohingegen bei größeren Rollendurchmessern ein verliersicheres Halten nicht sichergestellt wäre.

Nach radial außen hin ist das Öffnungsmaß Dₐ zwischen zwei benachbarten Stegelementen 12 kleiner als das nach radial innen hin, wobei es rein theoretisch bis in die Nähe von null gehen könnte, in der Praxis aber durch die an das Rollenlager gestellten Anforderungen, beispielsweise einer Außenführung des Käfigs 10 bestimmt ist.

In anderen Ausführungsformen kann natürlich auch das Öffnungsmaß nach radial außen in dem angegebenen Bereich zwischen 99 und 97 % des Rollendurchmessers liegen, so dass die Rollen von außen her einschnappbar sind und das Öffnungsmaß nach radial innen hin entsprechend kleiner gewählt ist.

Der Wälzlagerkäfig 10 ist dabei insbesondere spritz- und/oder gusstechnisch aus einem entsprechend spritz- und/oder gusstechnisch verarbeitbaren Material hergestellt. Als Materialien kommen dabei insbesondere Kunststoffe, aber auch Metalle, insbesondere Leichtmetalllegierungen, beispielsweise umfassend Aluminium, in Frage. In wiederum anderen Ausführungsformen kann der Wälzlagerkäfig 10 aber auch einen nicht spritz- und/oder gusstechnisch erzeugten Kern aus einem anderen Material beinhalten.

Bei spritz- und/oder gusstechnischer Herstellung des Wälzlagerkäfigs 10 umfasst die Spritz- und/oder Gussform entsprechend der Anzahl und der Form der Zylinderrollen eine entsprechende Anzahl von entsprechend geformten Kernen, die in wenigstens zwei weiteren Formteilen derart angeordnet werden, dass die zwischen den Kernen und den beiden Formteilen verbleibenden Freiräume den Wälzlagerkäfig 10 bilden. In einem an sich bekannten spritz- und/oder gusstechnischen Verfahren wird dann das Käfigmaterial in die besagten Freiräume eingebracht, beispielsweise ein bei entsprechender Temperatur flüssiger Kunststoff, der nach einem entsprechenden Abkühlen den Wälzlagerkäfig 10 einstückig und materialeinheitlich ausbildet. Da bekanntlich der Kunststoff beim Abkühlen einer Schrumpfung unterliegt, ist die Größe, insbesondere der Durchmesser der rollenartigen Kerne so gewählt, dass sich nach einem Schrumpfen die wunschgemäß dimensionierten Käfigtaschen ergeben. Dabei kann natürlich auch ein wunschgemäßes Spiel der Zylinderrolle in der Käfigtasche berücksichtigt werden.

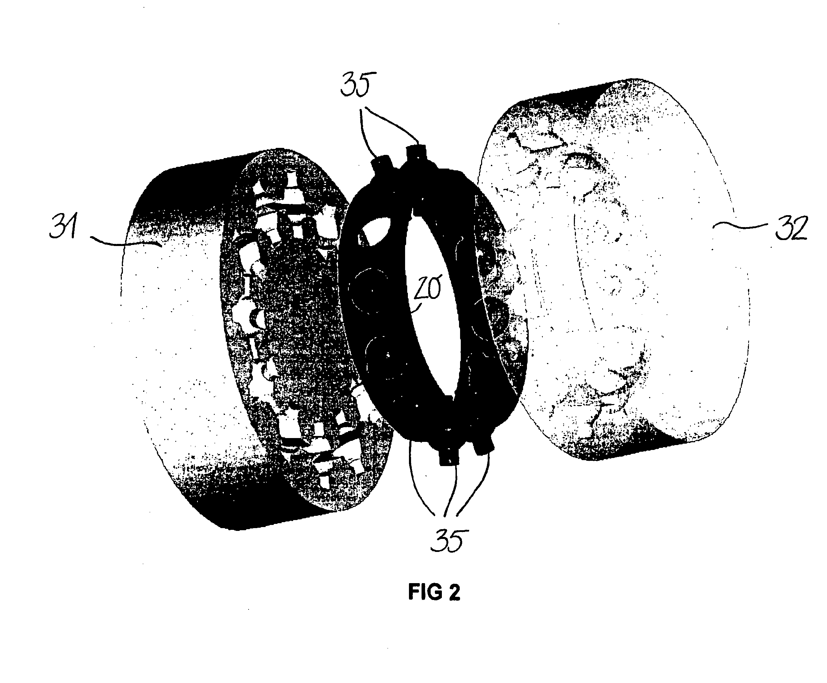

Die Figur 2 zeigt als ein weiteres Ausführungsbeispiel der Erfindung in perspektivischer Ansicht eine Spritzgussform zum Herstellen eines Kugellagerkäfigs 20, die zwei Formteile 31 und 32 sowie eine Mehrzahl einstückig ausgebildeter Kerne 35 umfasst. Dabei ist die Spritzgussform derart ausgebildet, dass die Zwischenräume für die Kugeln des Käfigs 20 zwischen den Stegelementen des Käfigs 20 durch die einstückig ausgebildeten Kerne 35 freigehalten werden. Die Kerne 35 sind dabei wenigstens im freizuhaltenden Bereich entsprechend den Kugeln ausgebildet; genauer gesagt entsprechen die Kerne 35 einer Kugelform, an der sich an zwei bezüglich dem Kugelmittelpunkt diametral gegenüberliegenden Stellen zylindrische Fortsätze anschließen. Die Kerne 35 und die Formteile 31 und 32 sind dabei derart aufeinander abgestimmt zusammensetzbar, dass zur Ausbildung des Kugellagerkäfigs 20 ein spritzgussfähiges Material in flüssigem Zustand in die zwischen den Kernen 35 und den Formteilen 31 und 32 verbleibenden Freiräume eingespritzt werden kann. Ansonsten gilt das vorausgehend für den Wälzlagerkäfig 10 Beschriebene sowohl hinsichtlich des Käfigs selbst als auch hinsichtlich des Verfahrens entsprechend auch für den Kugellagerkäfig 20 der Figur 2.

## Patentansprüche

1. Wälzlagerkäfig, beinhaltend folgende Merkmale:
- Der Käfig (10) ist einstückig spritz- und/oder gusstechnisch erzeugt,
- der Käfig (10) umfasst zwischen den Wälzkörpern angeordnete Stegelemente (12), die sich radial beidseits eines Teilkreises der Wälzkörper erstreckend ausgebildet sind,
- die den Wälzkörperoberflächen zum Gegenüberliegen vorgesehenen Flächen des Käfigs (10) sind entsprechend der Wälzkörperoberfläche geformt, **dadurch gekennzeichnet, dass**
- ein Öffnungsmaß zwischen zwei benachbarten Stegelementen nach radial innen oder außen zwischen 99 und 97 % des Wälzkörperdurchmessers und zur radial anderen Richtung kleiner als in die radial erste Richtung ist.

2. Wälzlagerkäfig (10) nach Anspruch 1, wobei das Öffnungsmaß (Di) nach radial innen hin in etwa zwischen 99 und 97 % des Wälzkörperdurchmessers beträgt.

3. Wälzlagerkäfig nach Anspruch 2, wobei das Öffnungsmaß (Da) nach radial außen hin in etwa zwischen 97 und 95 % des Wälzkörperdurchmessers beträgt.

4. Wälzlagerkäfig nach einem der Ansprüche 1 bis 3, wobei der Wälzlagerkäfig (10) wenigstens ein ringartiges Seitenelement umfasst, von dessen einer Stirnseite die Stegelemente abzweigen.

5. Wälzlagerkäfig nach einem der Ansprüche 1 bis 4, wobei eine Einhüllende des Käfigs (10) ein Hohlzylinder mit kreiszylindrischem Innen- und Außenmantel ist.

6. Wälzlagerkäfig nach einem der Ansprüche 1 bis 5, wobei der Käfig (10) als ein Zylinderrollenlagerkäfig oder Kugellagerkäfig ausgebildet ist.

7. Wälzlagerkäfig nach einem der Ansprüche 1 bis 6, wobei wenigstens die den Wälzkörpern unmittelbar gegenüberliegenden Bereiche des Käfigs aus einem Kunststoff spritzgusstechnisch erzeugt sind.

8. Verfahren zum Herstellen eines Wälzlagerkäfigs nach einem der Ansprüche 1 bis 7 mit einer Spritz- und/oder Gussform, die derart ausgebildet ist, dass die Zwischenräume für die als Rollen ausgebildeten Wälzkörper zwischen den Stegelementen des Käfigs (20) durch entsprechend den Rollen ausgebildete Kerne (35) freigehalten werden, und die wenigstens zwei weitere Formteile (31, 32) umfasst, wobei die Kerne (35) und die Formteile (31, 32) zusammengesetzt werden und ein spritz- und/oder gussfähiges Material in flüssigem Zustand in die zwischen den Kernen (35) und den Formteilen (31, 32) verbleibenden Freiräume eingespritzt und/oder eingegossen wird.

9. Verfahren nach Anspruch 8, wobei die entsprechend den Rollen ausgebildeten Kerne (35) einstückig ausgebildet sind.

10. Verfahren nach einem der Ansprüche 8 oder 9, wobei die Kerne (35) gegenüber den Wälzkörpern zur Kompensation der Materialschrumpfung nach dem
Spritzgießen mit einem Übermaß von 0,1 % bis 0,6 % des Wälzkörperdurchmessers gegebenenfalls abzüglich eines wunschgemäßen Spiels der Wälzkörper im Käfig ausgebildet werden.

11. Verfahren nach einem der Ansprüche 8 bis 10, wobei die Spritz- und/oder Gießform derart gestaltet ist, dass die Kerne (35) bei im im Wesentlichen reversibel Käfigmaterialverformung ausschließlich nach radial innen hin aus dem Käfig (20) herausgedrückt werden können.

12. Verfahren nach einem der Ansprüche 8 bis 11, wobei das Material durch Erwärmen verflüssigt wird und die Kerne (35) bei noch nicht auf Umgebungstemperatur abgekühltem Material aus dem Käfig (20) herausgedrückt werden.

13. Verfahren nach einem der Ansprüche 8 bis 12, wobei die beiden Formteile (31, 32) gegeneinander axial entformt werden.

## Claims

1. Rolling bearing cage comprising the following features:
- the cage (10) is produced in one piece by injection moulding or casting,
- the cage (10) comprises web elements (12) which are arranged between the rolling bodies and which are designed to extend radially to both sides of a pitch circle of the rolling bodies,
- those surfaces of the cage (10) which are provided so as to face the rolling body surfaces are shaped correspondingly to the rolling body surface,
**characterized in that**
- an opening dimension between two adjacent web elements in the radially inward or outward direction is between 99 and 97% of the rolling body diameter, and is smaller in the other radial direction than in the first radial direction.

2. Rolling bearing cage (10) according to Claim 1, the opening dimension (Di) in the radially inward direction amounting to approximately between 99 and 97% of the rolling body diameter.

3. Rolling bearing cage according to Claim 2, the opening dimension (Da) in the radially outward direction amounting to approximately between 97 and 95% of the rolling body diameter.

4. Rolling bearing cage according to one of Claims 1 to 3, the rolling bearing cage (10) comprising at least one annular side element, from one face side of which the web elements branch off.

5. Rolling bearing cage according to one of Claims 1 to 4, an envelope of the cage (10) being a hollow cylinder with round cylindrical inner and outer surfaces.

6. Rolling bearing cage according to one of Claims 1 to 5, the cage (10) being designed as a cylinder-roller bearing cage or ball bearing cage.

7. Rolling bearing cage according to one of Claims 1 to 6, at least those regions of the cage which directly face the rolling bodies being produced from a plastic by injection moulding.

8. Method for producing a rolling bearing cage according to one of Claims 1 to 7 by means of an injection mould or casting mould which is designed such that the intermediate spaces for the rolling bodies, which are designed as rollers, between the web elements of the cage (20) are kept free by cores (35) designed correspondingly to the rollers and which comprises at least two further mould parts (31, 32), the cores (35) and the mould parts (31, 32) being placed together and an injection-mouldable and/or castable material being injected and/or cast, in the liquid state, into the free spaces remaining between the cores (35) and the mould parts (31, 32).

9. Method according to Claim 8, the cores (35) which are designed correspondingly to the rollers being formed in one piece.

10. Method according to either of Claims 8 and 9, wherein in order to compensate for the material shrinkage after the injection moulding, the cores (35) are formed with an oversize in relation to the rolling bodies of 0.1% to 0.6% of the rolling body diameter, if appropriate minus a desired play of the rolling bodies in the cage.

11. Method according to one of Claims 8 to 10, the injection mould and/or casting mould being designed such that the cores (35) can be pushed only radially inward out of the cage (20) under substantially reversible deformation of the cage material.

12. Method according to one of Claims 8 to 11, the material being liquefied by heating, and the cores (35) being pushed out of the cage (20) before the material has cooled to the ambient temperature.

13. Method according to one of Claims 8 to 12, wherein for demoulding, the two mould parts (31, 32) are moved apart axially.

## Revendications

1. Cage de palier de roulement présentant les caractéristiques suivantes :
- la cage (10) est réalisée d'une seule pièce par une technique d'injection et/ou de coulée,
- la cage (10) comprend des éléments de nervure (12) disposés entre les corps de roulement, lesquels sont réalisés de manière à s'étendre radialement de chaque côté d'un cercle partiel des corps de roulement,
- les surfaces de la cage (10) prévues en face des surfaces des corps de roulement sont formées de manière correspondant à la surface des corps de roulement,
**caractérisée en ce**
- **qu'**une dimension d'ouverture entre deux éléments de nervure adjacents dans la direction radialement vers l'intérieur ou vers l'extérieur vaut entre 99 et 97 % du diamètre des corps de roulement et par rapport à l'autre direction radiale est inférieure à la dimension d'ouverture dans la première direction radiale.

2. Cage de palier de roulement (10) selon la revendication 1, dans laquelle la dimension d'ouverture (Di) radialement vers l'intérieur vaut approximativement entre 99 et 97% du diamètre des corps de roulement.

3. Cage de palier de roulement selon la revendication 2, dans laquelle la dimension d'ouverture (Da) radialement vers l'extérieur vaut approximativement entre 97 et 95% du diamètre des corps de roulement.

4. Cage de palier de roulement selon l'une quelconque des revendications 1 à 3, dans laquelle la cage de palier de roulement (10) comprend au moins un élément latéral de type bague, depuis un côté frontal duquel partent les éléments de nervure.

5. Cage de palier de roulement selon l'une quelconque des revendications 1 à 4, dans laquelle l'enveloppante de la cage (10) est un cylindre creux avec une enveloppe cylindrique circulaire interne et externe.

6. Cage de palier de roulement selon l'une quelconque des revendications 1 à 5, dans laquelle la cage (10) est réalisée sous forme de cage de palier à rouleaux cylindriques ou sous forme de cage de roulement à billes.

7. Cage de palier de roulement selon l'une quelconque des revendications 1 à 6, dans laquelle au moins les régions de la cage immédiatement opposées aux corps de roulement sont fabriquées par une technique de moulage par injection de plastique.

8. Procédé de fabrication d'une cage de palier de roulement selon l'une quelconque des revendications 1 à 7, comprenant un moule d'injection et/ou de coulée, qui est réalisé de telle sorte que les espaces intermédiaires pour les corps de roulement réalisés sous forme de rouleaux entre les éléments de nervure de la cage (20) soient conservés vides par des noyaux (35) réalisés de manière correspondant aux rouleaux, et qui comprend au moins deux autres pièces de moule (31, 32), les noyaux (35) et les pièces de moule (31, 32) étant assemblés et un matériau injectable et/ou coulable étant injecté et/ou coulé à l'état fondu dans les espaces libres subsistant entre les noyaux (35) et les pièces de moule (31, 32).

9. Procédé selon la revendication 8, dans lequel les noyaux (35) réalisés de manière correspondant aux rouleaux sont réalisés d'une seule pièce.

10. Procédé selon l'une quelconque des revendications 8 ou 9, dans lequel les noyaux (35) sont réalisés par rapport aux corps de roulement de manière à compenser le retrait de matériau après le moulage par injection avec un surdimensionnement de 0,1% à 0,6% du diamètre des corps de roulement, éventuellement en déduisant un jeu souhaitable des corps de roulement dans la cage.

11. Procédé selon l'une quelconque des revendications 8 à 10, dans lequel le moule d'injection et/ou de coulée est configuré de telle sorte que les noyaux (35) puissent être ressortis exclusivement radialement vers l'intérieur hors de la cage (20) avec déformation du matériau de la cage sensiblement réversible.

12. Procédé selon l'une quelconque des revendications 8 à 11, dans lequel le matériau est liquéfié par chauffage et les noyaux (35) sont ressortis hors de la cage (20) alors que le matériau n'a pas encore été refroidi à la température ambiante.

13. Procédé selon l'une quelconque des revendications 8 à 12, dans lequel les deux pièces du moule (31, 32) sont démoulées axialement l'une par rapport à l'autre.
